# EUROPÄISCHE PATENTANMELDUNG

(11) **EP 4 491 006 A1**
(43) Veröffentlichungstag der Anmeldung: **15.01.2025**
(21) Anmeldenummer: 24176988.4
(22) Anmeldetag: 21.05.2024
(51) Int. Cl.: A01D 41/00, A01D 41/02, A01D 41/12, A01F 12/44

(54) **SELBSTFAHRENDER MÄHDRESCHER**

(30) Priorität: 13.07.2023 DE 102023118559
(71) Anmelder: CLAAS Selbstfahrende Erntemaschinen GmbH, 33428 Harsewinkel (DE)
(72) Erfinder: Vieregge, Christopher, 32694 Dörentrup (DE); Beckmann, Hermann-Konstantin, 32584 Löhne (DE); Diekamp, Andreas, 49176 Hilter (DE)
(74) Vertreter: CLAAS 365FarmNet GmbH

(57) **Zusammenfassung**

Die vorliegende Erfindung betrifft einen selbstfahrender Mähdreschen (1), umfassend eine Dreschvorrichtung (5), eine Abscheidevorrichtung (8), eine Reinigungsvorrichtung (9) sowie eine der Reinigungsvorrichtung (9) nachgeordnete Sauggebläsevorrichtung (11) als Arbeitsaggregate, die in einem Prozessraum (19) angeordnet sind, der durch zumindest ein Gehäuse gebildet ist, wobei der Mähdrescher (1) zumindest eine weitere Sauggebläsevorrichtung (24) umfasst, welche der Dreschvorrichtung (5) vorgelagert au-ßerhalb des Prozessraumes (19) angeordnet ist und die dazu eingerichtet ist, während eines Erntevorgangs auftretenden Staub abzusaugen und dem Prozessraum (19) zuzuführen.

## Beschreibung

Die vorliegende Erfindung betrifft einen selbstfahrenden Mähdrescher gemäß dem Oberbegriff des Anspruches 1.

Aus der DE 1 162 618 B ist ein selbstfahrender Mähdrescher bekannt, welcher im Bereich des Einzugskanals mehrere Absaugkanäle zur Absaugung von Staub und dergleichen während des Ernteprozesses aufweist. Die Absaugkanäle sind mit einer Absaugvorrichtung verbunden. Der von der Absaugvorrichtung angesaugte, durch Staub verunreinigte Luftstrom wird druckseitig an einen Kanal zur Ausbringung an der Unterseite des Mähdreschers abgegeben. Die Austrittsöffnung des Kanals ist dabei räumlich hinter einem Druckwindgebläse der Reinigungsvorrichtung des Mähdreschers angeordnet.

Ausgehend vom vorstehend genannten Stand der Technik liegt der Erfindung die Aufgabe zugrunde, einen selbstfahrenden Mähdrescher der eingangs genannten Art weiterzubilden, welcher sich durch eine verbesserte Ableitung von im Bereich des Einzugskanals abgesaugtem Staub auszeichnet.

Diese Aufgabe wird erfindungsgemäß durch einen selbstfahrenden Mähdrescher mit den Merkmalen des Anspruches 1 gelöst. Vorteilhafte Weiterbildungen sind Gegenstand der hiervon abhängigen Ansprüche.

Gemäß dem Anspruch 1 wird ein selbstfahrender Mähdrescher vorgeschlagen, der eine Dreschvorrichtung, eine Abscheidevorrichtung, eine Reinigungsvorrichtung sowie eine der Reinigungsvorrichtung nachgeordnete Sauggebläsevorrichtung als Arbeitsaggregate umfasst, die in einem Prozessraum angeordnet sind. Erfindungsgemäß ist vorgesehen, dass der Mähdrescher zumindest eine weitere Sauggebläsevorrichtung umfasst, welche der Dreschvorrichtung vorgelagert außerhalb des Prozessraumes angeordnet ist und die dazu eingerichtet ist, während eines Erntevorgangs auftretenden Staub abzusaugen und dem Prozessraum zuzuführen. Die erfindungsgemäße Ausgestaltung erlaubt es, den während des Erntevorgangs entstehenden Staub im frontseitigen Bereich des Mähdreschers in den Prozessraum zu führen, sodass dieser gemeinsam mit den Nichtkornbestandteilen über die der Reinigungsvorrichtung nachgeordneten Sauggebläsevorrichtung heckseitig aus dem Mähdrescher geführt wird. Bevorzugt erfolgt dies durch eine Verteilvorrichtung im Heckbereich des Mähdreschers.

Insbesondere kann die zumindest eine weitere Sauggebläsevorrichtung räumlich im Übergangsbereich zwischen Einzugskanal und der dem Einzugskanal nachgeordneten Dreschvorrichtung angeordnet sein. Mit Übergangsbereich ist der Abgabebereich des vom im Einzugskanal angeordneten Schrägförderer geförderten Ernteguts an die Dreschvorrichtung bezeichnet.

Bevorzugt kann die zumindest eine weitere Sauggebläsevorrichtung unterhalb einer Fahrerkabine des Mähdreschers an einem die Dreschvorrichtung umgebenden Gehäuseabschnitt angeordnet sein. Bei dem Gehäuseabschnitt kann es sich um einen außenseitigen Abschnitt eines Maschinengehäuses des Mähdreschers handeln.

Alternativ kann die zumindest eine weitere Sauggebläsevorrichtung auf der Oberseite des Einzugskanals und/oder seitlich am Einzugskanal angeordnet sein.

Bevorzugt kann die zumindest eine weitere Sauggebläsevorrichtung eingesaugten Staub druckseitig unmittelbar einem die Dreschvorrichtung umgebenden Prozessraumabschnitt zuführen. Die Anforderung an die Saugleistung der zumindest einen weiteren Sauggebläsevorrichtung kann dadurch gering gehalten werden. Der staubbelastete Luftstrom, welcher dem die Dreschvorrichtung umgebenden Prozessraumabschnitt, der Teil des Prozessraumes ist, zugeführt wird, wird von der im Prozessraum angeordneten Sauggebläseanordnung weitergefördert. Dabei kann der dem Prozessraumabschnitt von der weiteren Sauggebläsevorrichtung zugeführte staubbelastete Luftstrom bevorzugt im Bereich unterhalb der Dreschvorrichtung, d.h. unterhalb der Dreschkörbe, zugeführt werden.

Alternativ kann die zumindest eine weitere Sauggebläsevorrichtung eingesaugten Staub durch zumindest ein druckseitig an der zumindest einen weiteren Sauggebläsevorrichtung angeschlossenes Kanalsegment mit einem die Abscheidevorrichtung umgebenden Prozessraumabschnitt verbunden sein. Gemäß dieser Ausführung kann der staubbelastete Luftstrom unter Umgehung der Dreschvorrichtung in den die Abscheidevorrichtung umgebenden Prozessraumabschnitt als Teil des Prozessraumes eingeleitet werden.

Insbesondere kann die räumlich im Übergangsbereich angeordnete zumindest eine weitere Sauggebläsevorrichtung im Wesentlichen mittig und/oder randseitig positioniert sein.

Gemäß einer Weiterbildung kann oberhalb des Einzugskanals ein diesen zumindest abschnittsweise überdeckendes Absauggehäuse angeordnet sein, welches saugseitig an die zumindest eine weitere Sauggebläsevorrichtung angeschlossen ist. Dabei kann das Absauggehäuse den Einzugskanal in Längsrichtung und Querrichtung zumindest abschnittsweise überdecken. Dies ermöglicht die Absaugung von Staub, der vor sowie aus dem Einzugskanal entweicht, welcher die Sicht aus der Fahrerkabine heraus beeinträchtigen kann.

Insbesondere kann das Absauggehäuse wenigstens auf seiner der Vorderkante des Einzugskanals zugewandten Seite zumindest abschnittsweise offen ausgeführt sein. Hierdurch lässt sich im Anschlussbereich des Einzugskanals, in dem ein Vorsatzgerät zur Erntegutaufnahme angeordnet ist, eine Absaugung von Staub erreichen.

Des Weiteren kann das Absauggehäuse sich abschnittsweise verjüngend ausgeführt sein. Hierzu können, bezogen auf eine Längsachse des Einzugskanals, einander gegenüberliegende Seitenwände des Absauggehäuses zunächst im Wesentlichen parallel verlaufend ausgeführt sein. Eine Außenwand des Absauggehäuses kann im weiteren Verlauf auf einer Seite des Absauggehäuses abschnittsweise diagonal zur Längsachse verlaufen. Dadurch kann sich halbseitig eine trichterförmige Kontur des Absauggehäuses ausbilden, durch welche der mit Staub belastete Luftstrom in Richtung eines Stutzens am Absauggehäuse gelenkt wird. Der an das Absauggehäuse angeschlossene Stutzen kann saugseitig in die zumindest eine weitere Sauggebläsevorrichtung einmünden.

Gemäß einer bevorzugten Weiterbildung können zwei zusätzliche Sauggebläsevorrichtungen im Übergangsbereich zwischen Einzugskanal und der dem Einzugskanal nachgeordneten Dreschvorrichtung angeordnet sein.

Weiterhin können die beiden Sauggebläsevorrichtungen randseitig im Übergangsbereich angeordnet sein. Dabei kann es sich um eine beidseitige Anordnung unterhalb der Fahrerkabine des Mähdreschers an dem die Dreschvorrichtung umgebenden Gehäuseabschnitt handeln oder um eine im Wesentlichen symmetrische Anordnung auf der Oberseite oder an Seitenwände des Einzugskanals.

Die vorliegende Erfindung wird nachstehend anhand eines in den Zeichnungen dargestellten Ausführungsbeispieles näher erläutert.

Es zeigen:
- Fig. 1: schematisch und exemplarisch eine Darstellung eines Mähdreschers in Seitenansicht;
- Fig. 2: schematisch und exemplarisch eine Teilansicht von Arbeitsaggregaten des Mähdreschers gemäß Fig. 1;
- Fig. 3: schematisch und exemplarisch eine Teilansicht nach Fig. 2 gemäß einer Weiterbildung;
- Fig. 4: schematisch und exemplarisch eine Teilansicht der Arbeitsaggregate des Mähdreschers gemäß Fig. 3 von oben; und
- Fig. 5: schematisch und exemplarisch eine Teilansicht nach Fig. 4 gemäß einer Weiterbildung.

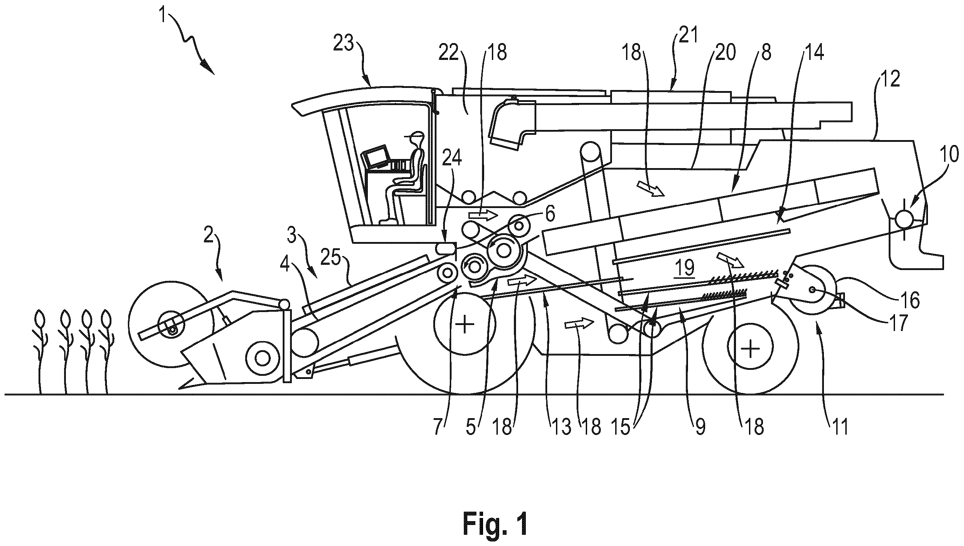

In Fig. 1 ist schematisch und exemplarisch eine Darstellung eines Mähdreschers 1 in Seitenansicht gezeigt.

Der Mähdrescher 1 umfasst ein Vorsatzgerät 2, welches an einem höhenverstellbaren Einzugskanal 3 angeordnet ist. Vom Vorsatzgerät 2 aufgenommenes Erntegut wird von einem im Einzugskanal 3 angeordneten Schrägförderer 4 einer Dreschvorrichtung 5, die als ein Mehrtrommeldreschwerk ausgeführt ist, zugeführt. Hierzu ist in einem die Dreschvorrichtung 5 umgebenden Gehäuseabschnitt 6 eine Öffnung vorgesehen, die sich im Wesentlichen über die Breite des Einzugskanals 3 erstreckt. Der Abgabebereich des von dem im Einzugskanal 3 angeordneten Schrägförderer 4 geförderten Ernteguts an die Dreschvorrichtung 5 wird als Übergangsbereich 7 bezeichnet.

Weiterhin umfasst der Mähdrescher 1 eine Abscheidevorrichtung 8, eine Reinigungsvorrichtung 9, eine Häckselvorrichtung 10 sowie eine Verteilvorrichtung, die hier und vorzugsweise als Radialverteiler ausgeführt ist. Mittels der Verteilvorrichtung wird von der Häckselvorrichtung 10 kommendes Stroh im rückwärtigen Bereich des Mähdreschers 1 ausgebracht. Die Abscheidevorrichtung 8 kann als zumindest ein nach dem Axialflussprinzip arbeitender Trennrotor ausgeführt sein. Alternativ kann die Abscheidevorrichtung 8 als sogenannter Hordenschüttler ausgeführt sein.

Die Dreschvorrichtung 5, die Abscheidevorrichtung 8, die Reinigungsvorrichtung 9 sowie die Häckselvorrichtung 10 sind zumindest teilweise von einem Maschinengehäuse 12 umgeben. Unterhalb der Dreschvorrichtung 5 ist ein oszillierend angetriebener Vorbereitungsboden 13 angeordnet. Unterhalb der Abscheidevorrichtung 8 ist ein ebenfalls oszillierend angetriebener Rücklaufboden 14 angeordnet, der im Wesentlichen parallel zu der Abscheidevorrichtung 8 geneigt verläuft. Die Reinigungsvorrichtung 9 umfasst zumindest zwei als ein Obersieb und ein Untersieb ausgeführte Reinigungssiebe 15. Der Vorbereitungsboden 13 liegt oberhalb der Siebebene der Reinigungsvorrichtung 9, hier des Obersiebes der Reinigungssiebe 15. Der Reinigungsvorrichtung 9 ist eine Sauggebläsevorrichtung 11 mit zumindest einem Sauggebläse nachgeordnet. Die Sauggebläsevorrichtung 11 weist ein Gebläsegehäuse 16 auf, in welchem zumindest ein Läufer des zumindest einen Sauggebläses um eine horizontal verlaufende Achse 17 rotiert, um einen Saugluftstrom 18 durch am Gebläsegehäuse 16 angeordnete Ansaugöffnungen aus einem Prozessraum 19 des Mähdreschers 1 anzusaugen.

Der Prozessraum 19 ist durch ein Aggregatgehäuse 20 abschnittsweise umschlossen. Dabei trennt das den Prozessraum 19 umgebende Aggregatgehäuse 20 die darin angeordneten Arbeitsaggregate zur Bearbeitung des aufgenommenen Erntegutes, die Dreschvorrichtung 5, die Abscheidevorrichtung 8, die Reinigungsvorrichtung 9, von anderen Arbeitsaggregaten, wie beispielsweise dem Antriebstrang, der einen als Verbrennungsmotor ausgeführten Antriebsmotor 21 umfasst, oder anderen Baugruppen, wie einen Korntank 22 sowie eine Überladevorrichtung des Mähdreschers 1. Der Mähdrescher 1 umfasst eine Fahrerkabine 23, welche oberhalb des Einzugskanals 3 angeordnet ist und sich abschnittsweise über diesen hinweg erstreckt.

Der Prozessraum 19 umfasst den innenliegenden Bereich des Mähdreschers 1, in welchem die Bearbeitung des aufgenommenen Erntegutes zur Trennung von Korn und Nichtkornbestandteilen von den darin angeordneten Arbeitsaggregaten durchgeführt wird und in welchem es daher zu den höchsten Belastungen durch Staub und Kurzstrohpartikel kommt. Der dem Prozessraum 19 entnommene Saugluftstrom 18 durchströmt dabei unter anderem die Reinigungssiebe 15 der Reinigungsvorrichtung 9. An das Gebläsegehäuse 16 der Sauggebläsevorrichtung 11 kann sich ein Kanalsegment anschließen, welches die Sauggebläsevorrichtung 11 mit der Verteilvorrichtung verbindet. Dadurch können im Saugluftstrom 18 enthaltene Nichtkornbestandteile von der Verteilvorrichtung ausgebracht werden.

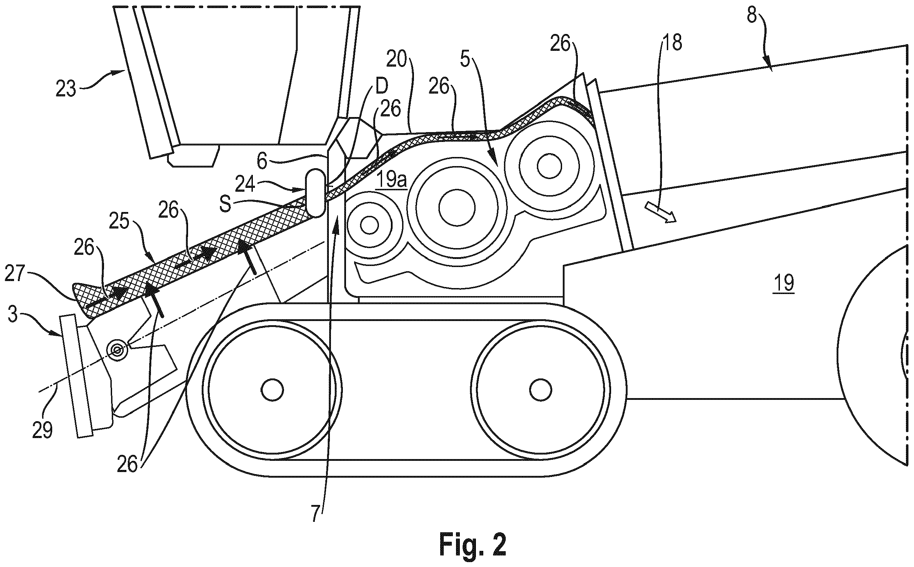

In Fig. 2 ist schematisch und exemplarisch eine Teilansicht von wesentlichen Arbeitsaggregaten des Mähdreschers 1 gemäß Fig. 1 dargestellt. Als Arbeitsaggregate zu sehen sind der Einzugskanal 3, die Dreschvorrichtung 5 sowie die Abscheidevorrichtung 8. Die Dreschvorrichtung 5 sowie die Abscheidevorrichtung 8 befinden sich im Prozessraum 19. Beim Aufnehmen von durch das Vorsatzgerät 2 geerntete Erntegut kommt es bei der Förderung im Einzugskanal 3 durch den Schrägförderer 4 zu einer Staubentwicklung, welche die Sicht eines Bedieners aus der Fahrerkabine 23 heraus beeinflussen kann. Um dem zu begegnen, ist vorgesehen, dass der Mähdrescher 1 zumindest eine weitere Sauggebläsevorrichtung 24 umfasst, welche der Dreschvorrichtung 5 vorgelagert außerhalb des Prozessraumes 19 angeordnet ist. Die zumindest eine weitere Sauggebläsevorrichtung 24 ist dazu eingerichtet, während eines Erntevorgangs auftretenden Staub abzusaugen und dem Prozessraum 19 zuzuführen. Hierzu ist die zumindest eine weitere Sauggebläsevorrichtung 24 räumlich im Übergangsbereich 7 zwischen dem Einzugskanal 3 und der dem Einzugskanal 3 nachgeordneten Dreschvorrichtung 5 angeordnet. In Fig. 2 ist die zumindest eine weitere Sauggebläsevorrichtung 24 am Gehäuseabschnitt 6 unterhalb der Fahrerkabine 23 positioniert.

Auf der der Fahrerkabine 23 zugewandten Oberseite des Einzugskanals 3 ist ein den Einzugskanal 3 zumindest abschnittsweise überdeckendes Absauggehäuse 25 angeordnet. Das Absauggehäuse 25 ist saugseitig an die zumindest eine weitere Sauggebläsevorrichtung 24 angeschlossen. Zur besseren Veranschaulichung sind Saugseite S und Druckseite D der zumindest einen weiteren Sauggebläsevorrichtung 24 kenntlichgemacht.

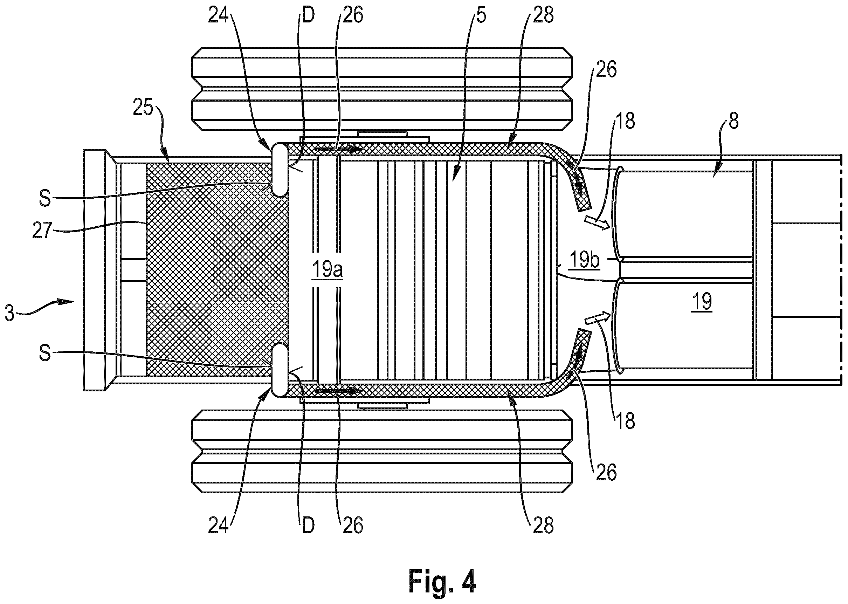

Das Absauggehäuse 25 kann auf seiner dem Vorsatzgerät 2 zugewandten Seite mit einer sich im Wesentlichen über die Breite des Einzugskanals 3 erstreckenden Ansaugöffnung 27 ausgeführt sein. Dadurch kann Staub abgesaugt werden, der beim Eintreten des Erntegutes in den Einzugskanal 3 durch Fördermittel des Vorsatzgerätes 2 erzeugt wird. Das Absauggehäuse 25 kann sich, wie in Fig. 4 dargestellt, zumindest abschnittsweise in Längsrichtung des Einzugskanals 3 erstrecken.

Mehrere Pfeile veranschaulichen einen überwiegend mit Staub beladenen Luftstrom 26, der an verschiedenen Stellen des Einzugskanals 3 in das Absauggehäuse 25 untenseitig eingesaugt wird. Obenseitig ist das Absauggehäuse 25 vorzugsweise geschlossen ausgeführt.

Im dargestellten Ausführungsbeispiel tritt der Luftstrom 26 auf der Druckseite D der zumindest einen weiteren Sauggebläsevorrichtung 24 aus und wird unmittelbar in den die Dreschvorrichtung 5 umgebenden Prozessraumbereich 19a, welcher Teil des Prozessraums 19 ist, abgegeben. Die Sauggebläsevorrichtung 11, welche den Saugluftstrom 18 auch im Bereich der Dreschvorrichtung 5 ansaugt, führt den von der Sauggebläsevorrichtung 24 eingebrachten Staub durch den Prozessraum 19 hindurch im Heckbereich nach außen ab. Die zumindest eine weitere Sauggebläsevorrichtung 24 kann dabei bezogen auf eine Längsachse 29 des Einzugskanal 3 im Wesentlichen mittig an dem Gehäuseabschnitt 6 angeordnet sein. Denkbar ist auch eine Anordnung von zwei Sauggebläsevorrichtungen 24 an dem Gehäuseabschnitt 6, die bezogen auf die Längsachse des Einzugskanal 3 in dessen äußeren Randbereichen positioniert sein können.

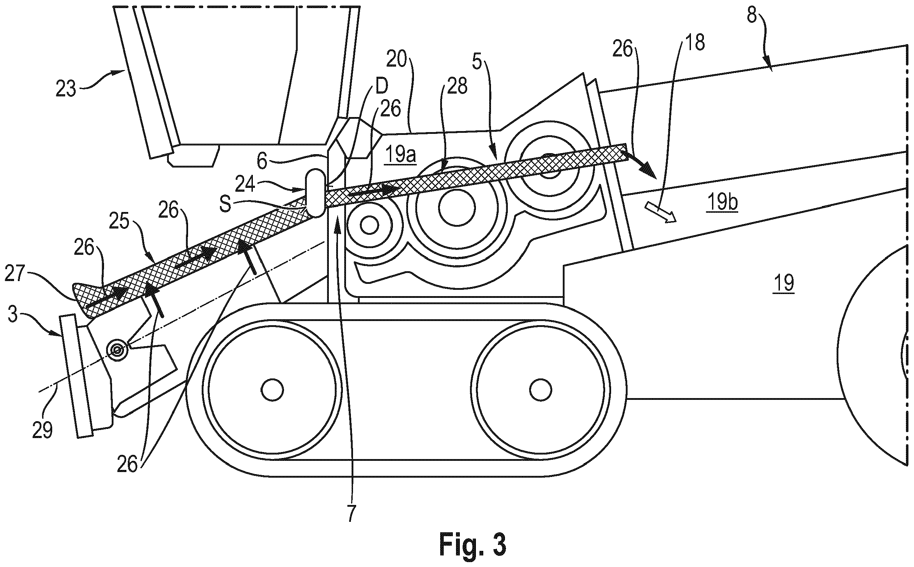

Die Darstellung in Fig. 3 zeigt schematisch und exemplarisch eine Teilansicht nach Fig. 2 gemäß einer Weiterbildung. Der Unterschied zu der in Fig. 2 dargestellten Ausführung besteht darin, dass an die Druckseite D der zumindest einen weiteren Sauggebläsevorrichtung 24 ein Kanalsegment 28 angeschlossen ist. Das Kanalsegment 28 mündet unter strömungstechnischer Umgehung der Dreschvorrichtung 5 und des diese umgebenden Prozessraumbereiches 19a unmittelbar hinter der Dreschvorrichtung 5 in den die Abscheidevorrichtung 8 umgebenden Prozessraumbereich 19b als Teil des Prozessraums 19 ein.

In Fig. 4 ist schematisch und exemplarisch eine Teilansicht der Arbeitsaggregate des Mähdreschers 1 gemäß Fig. 3 von oben dargestellt. Der von den beiden einander gegenüberliegend räumlich im Übergangsbereich 7 zwischen dem Einzugskanal 3 und der nachgeordneten Dreschvorrichtung 5 angeordneten Sauggebläsevorrichtungen 24 angesaugte, mit Staub belastete Luftstrom 26 tritt druckseitig in das daran angeschlossene Kanalsegment 28 ein und strömt im jeweiligen Kanalsegment 28 unter Umgehung der Dreschvorrichtung 5 respektive des Prozessraumbereiches 19a in den die Abscheidevorrichtung 8 umgebenden Prozessraumbereich 19b aus. Die Förderung des mit Staub belasteten Luftstroms 26 durch das jeweilige Kanalsegment 28 wird zum einen durch die Sauggebläsevorrichtung 24 und zum anderen durch den im Prozessraum 19 herrschenden Unterduck erreicht, welcher von der Sauggebläsevorrichtung 11 generiert wird.

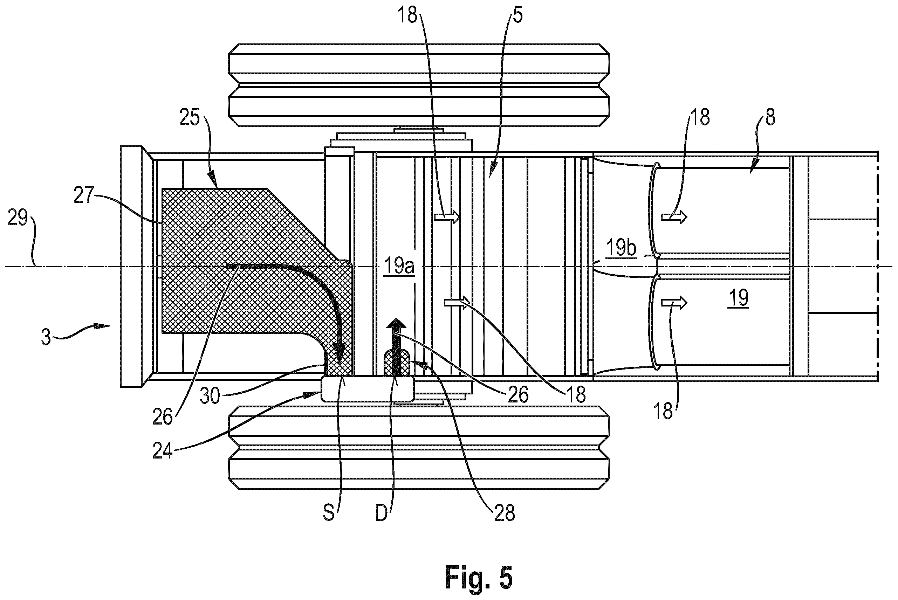

Die Darstellung in Fig. 5 zeigt schematisch und exemplarisch eine Teilansicht des Mähdreschers 1 nach Fig. 4 gemäß einer Weiterbildung. Gemäß dieser Weiterbildung ist vorgesehen, dass das Absauggehäuse 25 eine sich in Querrichtung, d.h. senkrecht zur Längsachse 29, abschnittsweise verjüngende Gehäusekontur aufweist.

Das Absauggehäuse 25 ist unmittelbar an die zumindest eine weitere Sauggebläsevorrichtung 24 angeschlossen. Dazu kann ein Stutzen 30 oder dergleichen, der am Absauggehäuse 25 angeordnet oder ausgebildet ist, auf der Saugseite S in die zumindest eine weitere Sauggebläsevorrichtung 24 münden.

Hierzu können, bezogen auf die Längsachse 29 des Einzugskanals 3, einander gegenüberliegende Seitenwände des Absauggehäuses 25 zunächst im Wesentlichen parallel verlaufend ausgeführt sein. Eine Außenwand des Absauggehäuses 25 kann im weiteren Verlauf auf einer Seite des Absauggehäuses 25 abschnittsweise diagonal zur Längsachse 29 verlaufen. Dadurch bildet sich halbseitig eine trichterförmige Kontur des Absauggehäuses 25 aus, durch welche der belastete Luftstrom 26 in Richtung des Stutzen 30 gelenkt wird. Ein auf der Druckseite D angeordnetes Kanalsegment 28 leitet den Luftstrom 26 in den Prozessraumabschnitt 19a ein.

Wie bereits ausgeführt, kann die zumindest eine weitere Sauggebläsevorrichtung 24 unterhalb der Fahrerkabine 23 des Mähdreschers 1 an einem die Dreschvorrichtung (2 umgebenden Gehäuseabschnitt 6 angeordnet sein. Alternativ oder zusätzlich kann die zumindest eine weitere Sauggebläsevorrichtung 24 auf der Oberseite des Einzugskanals 3 und/oder seitlich am Einzugskanal 3 angeordnet sein.

### Bezugszeichenliste

| | | | |
|---|---|---|---|
| 1 | Mähdrescher | D | Druckseite |
| 2 | Vorsatzgerät | S | Saugseite |
| 3 | Einzugskanal | | |
| 4 | Schrägförderer | | |
| 5 | Dreschvorrichtung | | |
| 6 | Gehäuseabschnitt | | |
| 7 | Übergangsbereich | | |
| 8 | Abscheidevorrichtung | | |
| 9 | Reinigungsvorrichtung | | |
| 10 | Häckselvorrichtung | | |
| 11 | Sauggebläsevorrichtung | | |
| 12 | Maschinengehäuse | | |
| 13 | Vorbereitungsboden | | |
| 14 | Rücklaufboden | | |
| 15 | Sieb | | |
| 16 | Gebläsegehäuse | | |
| 17 | Achse | | |
| 18 | Saugluftstrom | | |
| 19 | Prozessraum | | |
| 19a | Prozessraumabschnitt | | |
| 19b | Prozessraumabschnitt | | |
| 20 | Aggregatgehäuse | | |
| 21 | Antriebsmotor | | |
| 22 | Korntank | | |
| 23 | Fahrerkabine | | |
| 24 | Sauggebläsevorrichtung | | |
| 25 | Absauggehäuse | | |
| 26 | Luftstrom | | |
| 27 | Ansaugöffnung | | |
| 28 | Kanalsegment | | |
| 29 | Längsachse | | |
| 30 | Stutzen | | |

## Patentansprüche

1. Selbstfahrender Mähdrescher (1), umfassend eine Dreschvorrichtung (5), eine Abscheidevorrichtung (8), eine Reinigungsvorrichtung (9) sowie eine der Reinigungsvorrichtung (9) nachgeordnete Sauggebläsevorrichtung (11) als Arbeitsaggregate, die in einem Prozessraum (19) angeordnet sind, der durch zumindest ein Gehäuse gebildet ist, **dadurch gekennzeichnet, dass** der Mähdrescher (1) zumindest eine weitere Sauggebläsevorrichtung (24) umfasst, welche der Dreschvorrichtung (5) vorgelagert außerhalb des Prozessraumes (19) angeordnet ist und die dazu eingerichtet ist, während eines Erntevorgangs auftretenden Staub abzusaugen und dem Prozessraum (19) zuzuführen.

2. Selbstfahrender Mähdrescher (1) nach Anspruch 1, **dadurch gekennzeichnet, dass** die zumindest eine weitere Sauggebläsevorrichtung (24) räumlich im Übergangsbereich (7) zwischen Einzugskanal (3) und der dem Einzugskanal (3) nachgeordneten Dreschvorrichtung (5) angeordnet ist.

3. Selbstfahrender Mähdrescher (1) nach Anspruch 1 oder 2, **dadurch gekennzeichnet, dass** die zumindest eine weitere Sauggebläsevorrichtung (24) unterhalb einer Fahrerkabine (23) des Mähdreschers (1) an einem die Dreschvorrichtung (5) umgebenden Gehäuseabschnitt (6) angeordnet ist.

4. Selbstfahrender Mähdrescher (1) nach einem der Ansprüche 2 oder 3, **dadurch gekennzeichnet, dass** die zumindest eine weitere Sauggebläsevorrichtung (24) auf der Oberseite des Einzugskanals (4) und/oder seitlich am Einzugskanal (3) angeordnet ist.

5. Selbstfahrender Mähdrescher (1) nach einem der Ansprüche 1 bis 4, **dadurch gekennzeichnet, dass** die zumindest eine weitere Sauggebläsevorrichtung (24) eingesaugten Staub druckseitig unmittelbar einem die Dreschvorrichtung (5) umgebenden Prozessraumabschnitt (19a) zuführt.

6. Selbstfahrender Mähdrescher (1) nach einem der Ansprüche 1 bis 4, **dadurch gekennzeichnet, dass** die zumindest eine weitere Sauggebläsevorrichtung (24) eingesaugten Staub durch zumindest ein druckseitig an der zumindest einen weiteren Sauggebläsevorrichtung (24) angeschlossenes Kanalsegment (28) mit einem die Abscheidevorrichtung (8) umgebenden Prozessraumabschnitt (19b) verbunden ist.

7. Selbstfahrender Mähdrescher (1) nach einem der Ansprüche 2 bis 5, **dadurch gekennzeichnet, dass** die räumlich im Übergangsbereich (7) angeordnete zumindest eine weitere Sauggebläsevorrichtung (24) im Wesentlichen mittig und/oder randseitig positioniert ist.

8. Selbstfahrender Mähdrescher (1) nach einem der Ansprüche 2 bis 7, **dadurch gekennzeichnet, dass** oberhalb des Einzugskanals (3) ein diesen zumindest abschnittsweise überdeckendes Absauggehäuse (25) angeordnet ist, welches saugseitig an die zumindest eine weitere Sauggebläsevorrichtung (24) angeschlossen ist.

9. Selbstfahrender Mähdrescher (1) nach Anspruch 8, **dadurch gekennzeichnet, dass** das Absauggehäuse (25) wenigstens auf seiner der Vorderkante des Einzugskanals (3) zugewandten Seite zumindest abschnittsweise offen ausgeführt ist.

10. Selbstfahrender Mähdrescher (1) nach Anspruch 8 oder 9, **dadurch gekennzeichnet, dass** das Absauggehäuse (25) sich abschnittsweise verjüngend ausgeführt ist.

11. Selbstfahrender Mähdrescher (1) nach einem der vorangehenden Ansprüche,
**dadurch gekennzeichnet, dass** zwei Sauggebläsevorrichtungen (24) im Übergangsbereich (7) zwischen dem Einzugskanal (3) und der dem Einzugskanal (3) nachgeordneten Dreschvorrichtung (5) angeordnet sind.

12. Selbstfahrender Mähdrescher (1) nach Anspruch 11, **dadurch gekennzeichnet, dass** die beiden Sauggebläsevorrichtungen (24) randseitig im Übergangsbereich (7) angeordnet sind.
